# EUROPÄISCHE PATENTSCHRIFT

(11) **EP 1 366 396 B1**
(45) Veröffentlichungstag und Bekanntmachung des Hinweises auf die Patenterteilung: **06.04.2005**
(21) Anmeldenummer: 02703582.3
(22) Anmeldetag: 26.01.2002
(51) Int. Cl.: G05B 23/02

(54) **SCHALTSCHRANK ODER SCHALTSCHRANKANORDNUNG MIT EINER DARIN IN ANGEORDNETEN ÜBERWACHUNGSEINRICHTUNG**
SWITCH CUPBOARD OR SWITCH CUPBOARD ARRANGEMENT COMPRISING A MONITORING DEVICE ARRANGED THEREIN
ARMOIRE DE COMMANDE OU DISPOSITIF D'ARMOIRE DE COMMANDE COMPORTANT UN SYSTEME DE CONTROLE INTEGRE

(30) Priorität: 22.02.2001 DE 10108599
(43) Veröffentlichungstag der Anmeldung: 03.12.2003
(73) Patentinhaber: Rittal GmbH & Co. KG, 35745 Herborn (DE)
(72) Erfinder: LAURÖSCH, Sven, 35708 Haiger (DE); KREILING, Jörg, 35444 Biebertal (DE)
(74) Vertreter: Fleck, Hermann-Josef, Dr.-Ing.
(86) Internationale Anmeldenummer: PCT/EP2002/000829
(87) Internationale Veröffentlichungsnummer: WO 2002/069064

(56) Entgegenhaltungen:
- EP-A- 0 932 090
- WO-A-00/23857
- WO-A-00/77584
- WO-A-97/34345
- DE-A- 19 748 536

## Beschreibung

Die Erfindung bezieht sich auf einen Schaltschrank oder eine Schaltschrankanordnung mit mindestens einer darin angeordneten Überwachungseinrichtung für Schaltschrankfunktionen einschließlich Temperaturregulierung.

Ein derartiger Schaltschrank mit einer Überwachungseinrichtung, die auch Steuerungsaufgaben übernimmt, ist in der WO 97/34345 als bekannt ausgewiesen. Bei diesem bekannten Schaltschrank sind an eine zentrale Steuerungseinrichtung mit darin vorgesehenem Prozessor oder Mikrocontroller über Eingabe- und Ausgabeschnittstellen verschiedene, für den Betrieb und die Verwendung des Schaltschrankes an sich wichtige Sensoren, wie z.B. Temperaturfühler, Vibrationssensor, Rauchsensor, Feuchtefühler, Spannungsfühler, Türendschalter und dgl., sowie Aktoren. und Datenübertragungsverbindungen zu externen Bediengeräten angeschlossen.

Für die Temperaturregulierung können unterschiedliche Komponenten, wie z.B. Kühlgerät, Lüfter oder Heizung mit entsprechenden Steuerungs- oder Regelungskomponenten vorgesehen sein. Mit der Zahl unterschiedlicher Überwachungs-, Steuerungs- und Bedienmöglichkeiten wird eine derartige Überwachungseinrichtung zunehmend aufwendig.

Der Erfindung liegt die Aufgabe zugrunde, einen Schaltschrank oder eine Schaltschrankanordnung der eingangs genannten Art bereit zu stellen, bei dem die Überwachungsmöglichkeiten erweitert werden, wobei der Aufwand möglichst gering gehalten wird.

Diese Aufgabe wird mit den Merkmalen des Anspruches 1 gelöst. Hiernach ist vorgesehen, dass die Überwachungseinrichtung mit einer in dem Schaltschrank oder der Schaltschrankanordnung weiterhin angeordneten Serverumschalteinrichtung in Datenübertragungs-Verbindung gebracht ist und dass die Überwachungseinrichtung zum Erfassen von Betriebsdaten der Serverumschalteinrichtung und/oder zur Abgabe von Anzeigedaten an eine der Serverumschalteinrichtung zugeordnete Anzeigesteuereinrichtung und/oder zum Aufnehmen von über die Anzeigesteuereinrichtung eingegebenen Konfigurierungsdaten ausgebildet ist.

Durch diese Ausbildung und Verbindung mit der Serverumschalteinrichtung ergibt sich eine günstige Überwachungsmöglichkeit für den Server, wobei die Eigenschaften der Überwachungseinrichtung, wie Fehlererfassung, Fehlerregistrierung und Alarmmeldungen vorteilhaft genutzt werden. Zusätzlich oder alternativ werden umgekehrt auch für die Überwachungseinrichtung die speziellen Eigenschaften der der Serverumschalteinrichtung zugeordneten Anzeigesteuereinrichtung (OSD = On Screen Display) für die Überwachungseinrichtung genutzt, indem über die Anzeigesteuereinrichtung Meldungen, Konfigurationszustände und dgl. der Überwachungseinrichtung angezeigt und/oder eine Konfigurierung der Überwachungseinrichtung vorgenommen werden kann.

Die Überwachung ist dabei vorteilhaft in der Weise ausgebildet, dass die Betriebsdaten Funktionsdaten und/oder Bedienungsdaten umfassen. Auf diese Weise kann mittels der Überwachungseinrichtung z.B. festgestellt werden, ob Serverrechner aktiviert oder deaktiviert sind oder wurden oder ob berechtigte oder unberechtigte Benutzer eine Bedienung vorgenommen haben oder vornehmen wollten, wobei z.B. Benutzernamen, Password, Rechneridentifikation, Konsolen-Nummer und andere Beschreibungen erfasst und ausgewertet werden können.

Vorteilhaft ist weiterhin vorgesehen, dass die Datenübertragung zwischen der Überwachungseinrichtung und der Serverumschalteinrichtung über eine serielle Verbindung erfolgt.

Alternative günstige Ausgestaltungsmöglichkeiten bestehen darin, dass die Serverumschalteinrichtung und die Überwachungseinrichtung getrennte Gehäuse aufweisen und die Verbindung drahtlos oder über ein Kabel über serielle Schnittstellen erfolgt oder dass die Serverumschalteinrichtung und die Überwachungseinrichtung in einem gemeinsamen Gehäuse in verschiedenen Modulen angeordnet sind, wobei ein gemeinsamer Hauptschalter und ein gemeinsames Netzteil vorgesehen sind. Mit der Kabelverbindung sind auch nachträglich geeignete Anordnungsmöglichkeiten gegeben, während mit der Unterbringung in einem gemeinsamen Gehäuse die Kombination von vornherein eindeutig vorgegeben werden kann, wobei noch Variationsmöglichkeiten durch Austausch oder Ergänzung von Modulen bestehen.

Für den Aufbau und die Bedienung sind weiterhin die Maßnahmen vorteilhaft, dass die Überwachungseinrichtung an ein örtliches oder ein Fernübertragungs-Netzwerk angeschlossen oder anschließbar und über dieses mit einer entfernten Kontrollwarte verbunden oder verbindbar ist. Hierbei können geeignete Datenübertragungsprotokolle (derzeit z.B. über SNMP = Simple Network Management Protocol) verwendet werden. Alarm- und Statusmeldungen, die von der Überwachungseinrichtung hinsichtlich der Zustände der Sensoren und Aktoren in dem Schaltschrank und der Serverumschalteinrichtung(en) über das Netz weiter gegeben werden, werden dabei als Einheit (Trap) versendet. In der Meldung erscheinen dabei z.B. Datum, Uhrzeit, Informationen über die Überwachungseinrichtung (z.B. Ort, Name und weitere Beschreibungen), Informationen über die Serverumschalteinrichtung (beispielsweise Benutzername, Identifikation des Serverrechners, Konsolen-Nummer und weitere Beschreibungen) sowie Meldungen der Serverumschalteinrichtung (beispielsweise Rechner aktiv oder deaktiviert, Änderung der Konfiguration der Serverum-schalteinrichtung, Änderung der Zugriffsrechte auf die Serverumschalteinrichtung und Starten des Servers oder dgl.). Dabei kann zwischen festen Meldungen und sich ändernden Meldungen unterschieden werden.

Zur vorteilhaften Ausgestaltung tragen weiterhin die Maßnahmen bei, dass in der Schattschrankanordnung mehrere Serverumschalteinrichtungen vorhanden sind, wobei mindestens einem oder mehreren Serverumschalteinrichtungen gemeinsam nur eine Überwachungseinrichtung zugeordnet ist. Eine günstige Ausbildung besteht dabei darin, dass die Serverumschalteinrichtungen mit den ihnen zugeordneten Servern kaskadiert angeordnet sind, wobei alle Serverumschalteinrichtungen und die angeschlossenen Server in nur einer Anzeigesteuereinrichtung hinsichtlich Anzeige und Bedienung verwaltet sind. Die Kaskadierung wird dabei in der Weise vorgenommen, dass an eine Serverumschalteinrichtung anstelle eines oder mehrerer Server an den entsprechenden Anschluss eine oder mehrere weitere Serverumschalteinrichtungen angeschtos-sen werden. Entsprechend können an die weitere Serverumschalteinrichtung anstelle eines oder mehrerer dort angeschlossener Server noch weitere Serverumschalteinrichtungen angeschlossen werden. Alle angeschlossenen Serverumschalteinrichtungen und Server können dabei von der Anzeigesteuereinrichtung der übergeordneten Serverumschalteinrichtung verwaltet und übersichtlich dargestellt werden. Dabei dient die Anzeigesteuereinrichtung auch für die an die entsprechende Serverumschalteinrichtung und/oder die weiteren Serverumschalteinrichtungen angeschlossenen Überwachungseinrichtungen. Günstig ist es hierbei, eine Überwachungseinrichtung an der Serverumschalteinrichtung mit der verwaltenden Anzeigesteuereinrichtung anzuschließen. Da alle wesentlichen Daten der kaskadierten Anordnung in dieser Serverumschalteinrichtung zusammenlaufen, kann auch die Überwachungseinrichtung zur Überwachung der entsprechenden Daten herangezogen werden.

Die Bedienung kann weiterhin dadurch erleichtert werden, dass mit der oder den Serverumschalteinrichtungen über eine Fernkonsole ein Sichtgerät verbunden ist.

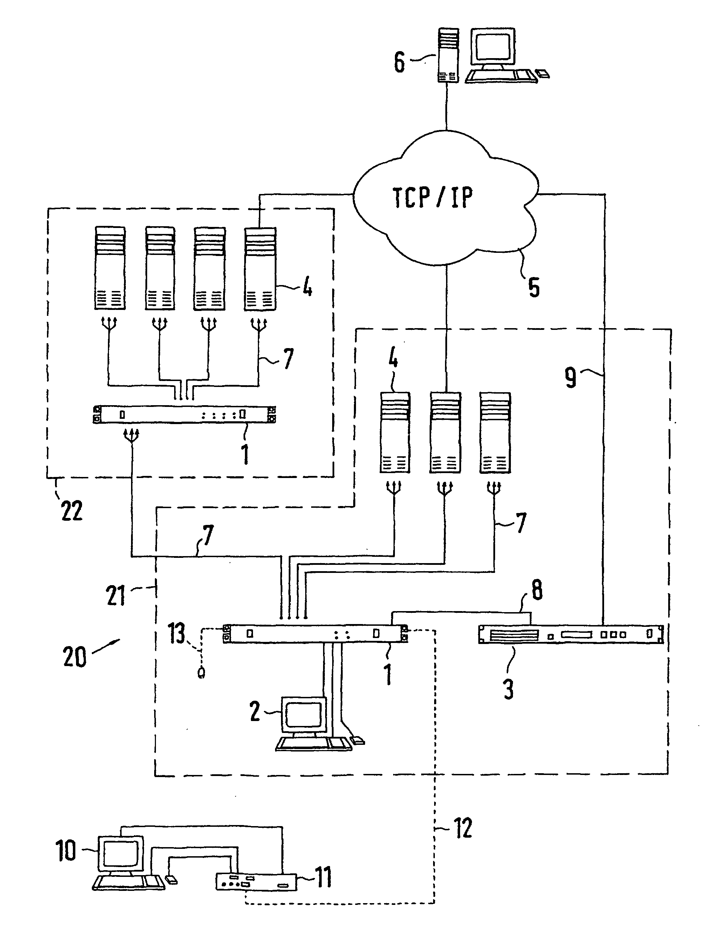

Die Erfindung wird nachfolgend anhand eines Ausführungsbeispiels unter Bezugnahme auf die Zeichnung näher erläutert.

Die Fig. zeigt schematisch eine kaskadierte Anordnung zweier Serverumschalteinrichtungen 1 mit daran über Serveranschtusskabel 7 angeschlossenen Servern 4 und einer an eine Serverumschalteinrichtung 1 angeschlossenen Überwachungseinrichtung 3, wobei die Anordnung in beispielhaft zwei Schaltschränken 21, 22 einer Schaltschrankanordnung 20 angeordnet ist.

Die Überwachungseinrichtung ist an ein Fernübertragungsnetz, wie Intranet oder auch Internet über einen Netzwerkanschluss 9 verbunden, wobei übliche Protokolle, wie z.B. SNMP (Simple Network Management Protocol) verwendet werden können. Über eine an dem Femübertragungs-Netzwerk 5 angeschlossene Kontrollwarte 6 kann dabei von einer Bedienperson das Überwachungsergebnis angezeigt, gegebenenfalls weiter abgefragt und protokolliert werden. An dem Fernübertragungs-Netzwerk 5 können in an sich üblicher Weise auch Server 4 angeschlossen sein.

Die Verbindung zwischen der Überwachungseinrichtung 3 und der Serverumschalteinrichtung 1 ist seriell und mittels eines Verbindungskabels 8 erforderlichenfalls unter Pegelanpassung vorgenommen; alternativ ist aber auch eine drahtlose Verbindung denkbar. Der Serverumschalteinrichtung 1 ist in an sich üblicher Weise eine Anzeigesteuereinrichtung 2 (OSD = On Screen Display) zur Abfrage und Bedienung der Serverumschalteinrichtungen 1 und der daran angeschlossenen Server 4 zugeordnet. Dieser Anzeigesteuereinrichtung 2 kommt vorliegend auch eine verwaltende Funktion in der kaskadierten Anordnung zu, wobei mit ihr alle in der Kaskade angeordneten Server 4 und gewünschtenfalls auch weitere Serverumschalteinrichtungen 1 mit entsprechenden Darstellungen sichtbar gemacht und über zugehörige Bedienungsgeräte wie Tastatur oder Maus bedient werden können. An die übergeordnete Serverumschalteinrichtung 1 sind über eine Anschlussleitung 12 von z.B. bis zu 200 Metern Länge und eine Fernkonsole 11 ein Sichtgerät 10 sowie auch eine Tastatur und eine Maus angeschlossen, um eine Bedienung auch von einer entfernten Stelle aus vornehmen zu können, wenn die Umgebungsbedingungen im Bereich der Schrankanordnung z.B. ungünstig sind. Ferner ist die übergeordnete Serverumschalteinrichtung 1 mit einem Versorgungsanschluss 13 für die Energieversorgung versehen.

Die Überwachungseinrichtung 3 ist derart ausgebildet, dass sie in Verbindung mit entsprechenden Schnittstellen und Sensoren alle für die Funktion des Schaltschrankes an sich unter verschiedenen Einsatzbedingungen wesentlichen Zustände, wie z.B. Feuchte, Schließzustand der Tür, Temperatur, Vibration, Rauchentwicklung, Strom- und Spannungszustände überwachen, erfassen, in einem Speicher registrieren, melden und Alarme auslösen kann, wenn vorgegebene, änderbare Grenzwerte nicht eingehalten werden. Zur Temperatursteuerung und/oder Temperaturregelung können verschiedene Kühl- oder Wärmeaggregate wie Wärmetauscher, Lüfter, Kühlgerät, Heizung mit entsprechenden Regelungs- und Ansteuerungseinheiten vorgesehen sein. Die Überwachungseinrichtung 3 ist vorzugsweise auch für einen Notbetrieb ausgelegt, wobei sie selbst über eine Notversorgung versorgt wird und sie andererseits zudem wesentliche Funktionen in einem Notbetrieb überwacht und aufrecht erhält. Diese Ausgestaltung der Überwachungseinrichtung 3 entspricht im Wesentlichen der in dem eingangs genannten Stand der Technik (WO 97/34345) beschriebenen. Weitere Maßnahmen betreffen dabei das Zugangskontrollsystem mit an sich bekannten Identifikationskontrollen, wie z.B. Chipkarte, Transponder oder ähnlichen Erkennungseinrichtungen, sowie diesbezügliche Registriervorrichtungen.

Über die serielle Verbindung zwischen der Überwachungseinrichtung 3 und der Serverumschalteinrichtung 1 werden mittels der Überwachungseinrichtung 3 in der Serverumschalteinrichtung 1 vorliegende Betriebsdaten, wie Funktionsdaten und/oder Bedienungsdaten erfasst und Statusmeldungen bzw. Alarmmeldungen generiert, wenn vorgegebene Kriterien nicht eingehalten sind. Die Alarm- oder Statusmeldungen werden mittels der Überwachungseinrichtung 3 als zusammengefasste Meldung (Trap) versendet. In dieser Meldung erscheinen als feste Meldung z.B. Datum, Uhrzeit, Systeminformation zur Überwachungseinrichtung 3 und Systeminformation zur Serverumschaltung 1. Als variable Meldung erscheinen in dem Trap z.B. ein Starten eines oder mehrerer Rechner (Softboot), eine Information, ob ein Rechner aktiv oder deaktiviert ist, eine Änderung einer Konfiguration der Serverumschalteinrichtung 1 und/oder eine Änderung der Zugriffsrechte der Serverumschalteinrichtung 1. Überwacht werden desweiteren der Benutzername, die Rechneridentifikation, eine Konsolen-Nummer und weitere Beschreibungen. Dadurch ist auch eine missbräuchliche Benutzung fest-stellbar. Auf diese Weise können an der Kontrollwarte 6 mittels der Überwachungseinrichtung 3 die Zustände an der oder den Serverumschalteinrichtungen 1 sowie den Servern 4 ebenfalls kontrolliert und registriert werden.

Umgekehrt werden Bedienungsfunktionen der Überwachungseinrichtung von der ohnehin der Serverumschalteinrichtung 1 zugeordneten Anzeigesteuereinrichtung 2 übernommen, nämlich die Anzeige von Überwachungsdaten, Meldungen und Beschreibungsdaten (z.B. Auslegung der Überwachungseinrichtung, angeschlossene Sensoren und Aktoren und deren Identifikation), die von der Überwachungseinrichtung 3 über die serielle Verbindung 8 zu der Serverumschalteinrichtung 1 übertragen werden. Die Anzeigesteuereinrichtung 2 ist so ausgebildet, dass auf ihr die die Überwachungseinrichtung 3 betreffenden Daten zusätzlich zu den die Server 4 und gegebenenfalls die weiteren Serverumschalteinrichtungen 1 betreffenden Daten benutzerfreundlich dargestellt werden. Mittels der der Anzeigesteuereinrichtung 2 zugeordneten Bedienelemente, wie Tastatur und Maus kann die Überwachungseinrichtung 4 konfiguriert werden, und es können Grenzwerte für die Überwachung des Schaltschrankinnenraumes eingegeben und geändert werden.

Sind in einer kaskadierten Anordnung allen oder einem Teil der weiteren Serverumschalteinrichtungen 1 ebenfalls eine jeweilige Überwachungseinrichtung 3 zugeordnet, so können über die einzige verwaltende Anzeigesteuereinrichtung 2 die Daten aller Überwachungseinrichtungen 3 dargestellt werden, und es kann über die Anzeigesteuereinrichtung 2 auch die Konfigurierung aller Überwachungseinrichtungen 3 vorgenommen werden.

## Patentansprüche

1. Schaltschrank oder Schaltschrankanordnung mit mindestens einer darin angeordneten Überwachungseinrichtung (3) für Schaltschrankfunktionen einschließlich Temperaturregulierung,
**dadurch gekennzeichnet,**
**dass** die Überwachungseinrichtung (3) mit einer in dem Schaltschrank oder der Schaltschrankanordnung weiterhin angeordneten Serverumschalteinrichtung (1) in Datenübertragungs-Verbindung gebracht ist und
**dass** die Überwachungseinrichtung (3) zum Erfassen von Betriebsdaten der Serverumschalteinrichtung (1) und/oder zur Abgabe von Anzeigedaten an eine der Serverumschalteinrichtung (1) zugeordnete Anzeigesteuereinrichtung (2) und/oder zum Aufnehmen von über die Anzeigesteuereinrichtung (2) eingegebenen Konfigurierungsdaten ausgebildet ist.

2. Schaltschrank oder Schaltschrankanordnung nach Anspruch 1,
**dadurch gekennzeichnet,**
**dass** die Betriebsdaten Funktionsdaten und/oder Bedienungsdaten umfassen.

3. Schaltschrank oder Schaltschrankanordnung nach Anspruch 1 oder 2,
**dadurch gekennzeichnet,**
**dass** die Datenübertragung zwischen der Überwachungseinrichtung (3) und der Serverumschalteinrichtung (1) über eine serielle Verbindung erfolgt.

4. Schaltschrank oder Schaltschrankanordnung nach einem der vorhergehenden Ansprüche,
**dadurch gekennzeichnet,**
**dass** die Serverumschalteinrichtung (1) und die Überwachungseinrichtung (3) getrennte Gehäuse aufweisen und die Verbindung drahtlos oder über ein Kabel über serielle Schnittstellen erfolgt oder
**dass** die Serverumschalteinrichtung (1) und die Überwachungseinrichtung (3) in einem gemeinsamen Gehäuse in verschiedenen Modulen angeordnet sind, wobei ein gemeinsamer Hauptschalter und ein gemeinsames Netzteil vorgesehen sind.

5. Schaltschrank oder Schaltschrankanordnung nach einem der vorhergehenden Ansprüche,
**dadurch gekennzeichnet,**
**dass** die Überwachungseinrichtung (3) an ein örtliches oder ein Fernübertragungs-Netzwerk (5) angeschlossen oder anschließbar und über dieses mit einer entfernten Kontrollwarte (6) verbunden oder verbindbar ist.

6. Schaltschrank oder Schaltschrankanordnung nach einem der vorhergehenden Ansprüche,
**dadurch gekennzeichnet,**
**dass** in der Schaltschrankanordnung mehrere Serverumschalteinrichtungen (1) vorhanden sind, wobei mindestens einem oder mehreren Serverumschalteinrichtungen (1 ) gemeinsam nur eine Überwachungseinrichtung (3) zugeordnet ist.

7. Schaltschrank oder Schaltschrankanordnung nach Anspruch 6,
**dadurch gekennzeichnet,**
**dass** die Serverumschalteinrichtungen (1) mit den ihnen zugeordneten Servern (4) kaskadiert angeordnet sind, wobei alle Serverumschalteinrichtungen (1) in nur einer Anzeigesteuereinrichtung (2) verwaltet sind.

8. Schaltschrank oder Schaltschrankanordnung nach Anspruch 7,
**dadurch gekennzeichnet,**
**dass** eine der Überwachungseinrichtungen (3) an derjenigen Serverumschalteinrichtung (1) angeschlossen ist, der die verwaltende Anzeigesteuereinrichtung (2) zugeordnet ist.

9. Schaltschrank oder Schaltschrankanordnung nach einem der vorhergehenden Ansprüche,
**dadurch gekennzeichnet,**
**dass** mit der oder den Serverumschalteinrichtungen (1) über eine Fernkonsole (11) ein Sichtgerät (10) verbunden ist.

## Claims

1. Switchgear cabinet or switchgear cabinet arrangement having at least one monitoring device (3) arranged therein for switchgear cabinet functions including temperature control,
**characterised in that**
the monitoring device (3) is connected to a server-switching device (1), also arranged in the switchgear cabinet or the switchgear cabinet arrangement, in a data transmission link, and
**in that** the monitoring device (3) is designed to detect operational data from the server-switching device (1) and/or provide display data to a display control device (2) associated with the server-switching device (1) and/or record configuration data input via the display control device (2).

2. Switchgear cabinet or switchgear cabinet arrangement according to claim 1, **characterised in that** the operational data comprise functional data and/or control data.

3. Switchgear cabinet or switchgear cabinet arrangement according to claim 1 or 2, **characterised in that** the data transmission between the monitoring device (3) and the server-switching device (1) takes place via a serial link.

4. Switchgear cabinet or switchgear cabinet arrangement according to one of the preceding claims, **characterised in that** the server-switching device (1) and the monitoring device (3) have separate housings and the connection takes place in a wireless manner or via a cable via serial interfaces, or
**in that** the server-switching device (1) and the monitoring device (3) are arranged in different modules in a common housing, a common master switch and a common power supply being provided.

5. Switchgear cabinet or switchgear cabinet arrangement according to one of the preceding claims, **characterised in that** the monitoring device (3) communicates or may communicate with a local or a remote transmission network (5) and is or may be connected via the latter to a remote control room (6).

6. Switchgear cabinet or switchgear cabinet arrangement according to one of the preceding claims, **characterised in that** a plurality of server-switching devices (1) are present in the switchgear cabinet arrangement, only one monitoring device (3) being associated with at least one or more server-switching devices (1) together.

7. Switchgear cabinet or switchgear cabinet arrangement according to claim 6, **characterised in that** the server-switching devices (1) are arranged cascaded with the servers (4) associated with them, all the server-switching devices (1) being managed in only one display control device (2).

8. Switchgear cabinet or switchgear cabinet arrangement according to claim 7, **characterised in that** one of the monitoring devices (3) communicates with that server-switching device (1) with which the managing display control device (2) is associated.

9. Switchgear cabinet or switchgear cabinet arrangement according to one of the preceding claims, **characterised in that** a display unit (10) is connected to the server-switching device or devices (1) via a remote console (11).

## Revendications

1. Armoire de commande ou agencement d'armoire de commande avec au moins un dispositif de surveillance intégré (3) pour des fonctions d'armoire de commande, y compris une régulation de température,
**caractérisée en ce**
**que** le dispositif de surveillance (3) est mis en liaison de transmission de données avec un dispositif de commutation de serveur (1), disposé encore dans l'armoire de commande ou dans l'agencement d'armoire de commande et que le dispositif de surveillance (3) est constitué pour la saisie de données de production du dispositif de commutation de serveur (1) et / ou pour la délivrance de données d'affichage à un dispositif de commande d'affichage (2), affecté au dispositif de commutation de serveur (1) et / ou pour recueillir des données de configuration, entrées par l'intermédiaire du dispositif de commande d'affichage (2).

2. Armoire de commande ou agencement d'armoire de commande selon la revendication 1,
**caractérisée en ce**
**que** les données de production comprennent des données fonctionnelles et / ou des données d'utilisation.

3. Armoire de commande ou agencement d'armoire de commande selon la revendication 1 ou 2,
**caractérisée en ce**
**que** la transmission de données entre le dispositif de surveillance (3) et le dispositif de commutation de serveur (1) s'opère par l'intermédiaire d'une liaison en série.

4. Armoire de commande ou agencement d'armoire de commande selon l'une des revendications précédentes,
**caractérisée en ce**
**que** le dispositif de commutation de serveur (1) et le dispositif de surveillance (3) présentent des boîtiers séparés et que la liaison s'opère sans fil ou par un câble par l'intermédiaire d'interfaces série ou
**que** le dispositif de commutation de serveur (1) et le dispositif de surveillance (3) sont disposés dans un boîtier commun dans des modules différents, un commutateur principal commun et un bloc d'alimentation commun étant prévus.

5. Armoire de commande ou agencement d'armoire de commande selon l'une des revendications précédentes,
**caractérisée en ce**
**que** le dispositif de surveillance (3) est raccordé à un réseau local ou de télétransmission (5) ou est relié ou peut être relié, de manière à pouvoir être raccordé et par l'intermédiaire de celui-ci, à un poste de contrôle distant (6).

6. Armoire de commande ou agencement d'armoire de commande selon l'une des revendications précédentes,
**caractérisée en ce**
**qu'**il existe, dans l'agencement d'armoire de commande, plusieurs dispositifs de commutation de serveur (1), un seul dispositif de surveillance (3) étant affecté en commun à au moins un ou plusieurs dispositifs de commutation de serveur (1).

7. Armoire de commande ou agencement d'armoire de commande selon la revendication 6,
**caractérisé en ce**
**que** les dispositifs de commutation de serveur (1) sont disposés en cascade avec les serveurs (4), qui leur sont affectés, tous les dispositifs de commutation de serveur (1) étant gérés dans un seul dispositif de commande d'affichage (2).

8. Armoire de commande ou agencement d'armoire de commande selon la revendication 7,
**caractérisé en ce**
**que** l'un des dispositifs de surveillance (3) est raccordé à celui ces dispositifs de commutation de serveur (1), auquel est affecté le dispositif de commande d'affichage gestionnaire (2).

9. Armoire de commande ou agencement d'armoire de commande selon l'une des revendications précédentes,
**caractérisée en ce**
**qu'**une unité de visualisation (10) est reliée à un ou aux dispositif(s) de commutation de serveur (1) par l'intermédiaire d'une console à distance (11).
